Europäisches Patentamt

European Patent Office

Office européen des brevets

(11) Publication number: **0 339 160**
**A1**

# EUROPEAN PATENT APPLICATION

(21) Application number: **88311832.5**

(22) Date of filing: **14.12.88**

(51) Int. Cl.4: **H04M 11/00**

(30) Priority: **27.04.88 US 186602**

(43) Date of publication of application:
**02.11.89 Bulletin 89/44**

(84) Designated Contracting States:
**DE FR GB**

(71) Applicant: **CONTROL DATA CORPORATION**
**8100-34th Avenue South**
**Minneapolis Minnesota 55440(US)**

(72) Inventor: **Fourdraine, John Dignus**
**4 Donora Drive**
**Toronto Ontario(CA)**

(74) Representative: **Caro, William Egerton et al**
**J. MILLER & CO. Lincoln House 296-302 High**
**Holborn**
**London WC1V 7JH(GB)**

(54) Method and apparatus for use in a tele-communication system.

(57) A method and apparatus for use in a telecommunication system are arranged to suppress ringing of a telephone hand set at a location including a modem (12) when communication with the modem over a telephone line is initiated. A micro-processor (11) responds to ringing signals on the telephone line during a predetermined time window to deliver an output to signal the modem to go off hook. When the modem goes off hook, means (Q6, R17, R21, R22, U5, U7, C11, R18, R20) for establishing a load across the telephone line for a predetermined time period are activated in order to prevent ringing of the telephone hand set for a period of time sufficient to allow ring trip to occur on the telephone line.

Xerox Copy Centre

## METHOD AND APPARATUS FOR USE IN A TELE-COMMUNICATION SYSTEM

This invention concerns a method and apparatus for use in a tele-communication sytem.

There are a large number of applications in which it is desirable to install automatic data collection and reporting devices in a remote unattended site. These devises typically report to a central computer system using some form of tele-communications modem. It is generally more desirable to install this equipment on a switched network telephone line rather than a permanently dedicated leased telephone line. Whenever possible, it is economically preferable to use an existing voice telephone line rather than install a special telephone line for the sole use of this equipment.

However, sharing a telephone line between normal subscriber usage and automatic machine usage can create some special problems. In particular, the presence of the automatic equipment may affect normal usage of the telephone line for voice communications. One problem that can and does occur, when automatic tele-communication is initiated by a central station dialling a modem connected to the telephone line, is that an abbreviated ringing of any telephone hand sets also connected to the telephone line results. This can occur if the modem does not go off hook soon enough or if there is a delay in ring trip at the telephone central office after the modem has gone off hook.

It is an object of this invention to provide a method and apparatus for use with an automatic telecommunication system which prevent abbreviated ringing of telephone hand sets connected to the common telephone line when an automated tele-communication call comes in.

In accordance with one aspect of the invention, there is provided apparatus for use in a tele-communication system for suppressing ringing of a telephone hand set at a location including a modem when communication with the modem over a telephone line is initiated, the apparatus being characterised by a micro-processor arranged in response to ringing signals on the telephone line during a predetermined time window to deliver an output to signal the modem to go off hook, and means for establishing a load across the telephone line for a predetermined time period when the modem goes off hook whereby to prevent ringing of the telephone hand set for a period of time sufficient to allow ring trip to occur on the telephone line.

In accordance with another aspect of the invention, there is provided a method of suppressing ringing of a telephone hand set at a location including a modem when communication with the modem over a telephone line is initiated, the method being characterised by controlling the modem to go off hook in response to ringing signals on the telephone line only during a predetermined time window, and establishing a load across the telephone line for a predetermined time period when the modem goes off hook whereby to prevent ringing of the telephone hand set for a period of time sufficient to allow ring trip to occur on the telephone line.

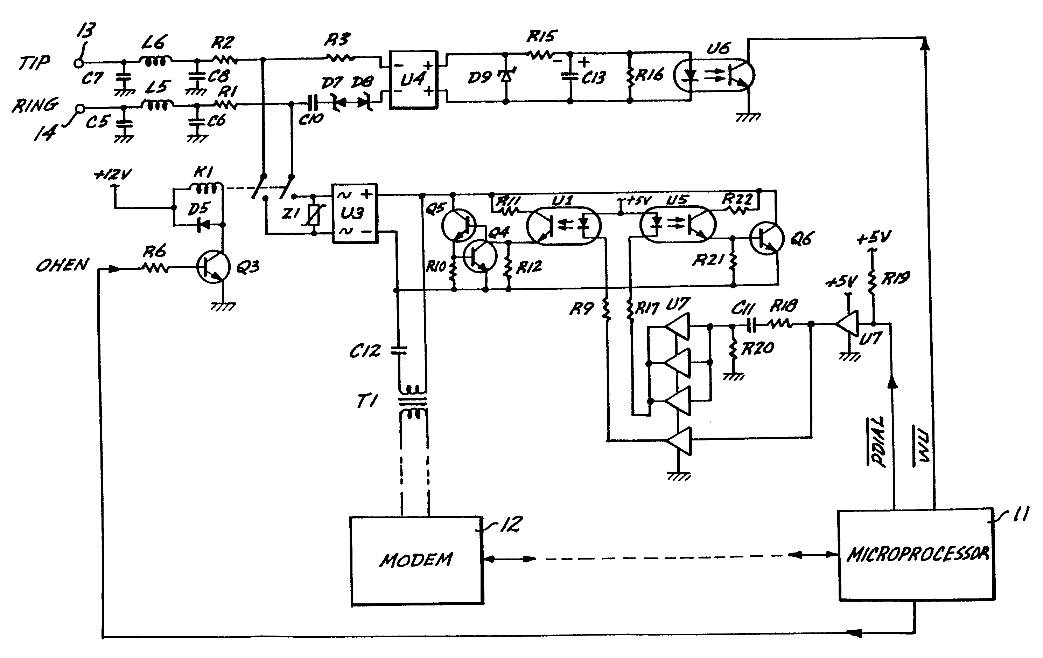

The invention is described further, by way of example, with reference to the accompanying drawing, which is a circuit diagram of an embodiment of the invention for preventing ringing of telephone hand sets, connected to a telephone line, during initiation of automatic tele-communication from a central site to a modem that is coupled to the telephone line at a remote location.

As shown in the drawing, a circuit embodying the invention comprises a micro-processor 11, which controls a modem 12. The dotted signal line in the drawing represents various inter-connections between the micro-processor 11 and the modem 12 which are not essential to an understanding of the present invention, and which are therefore not illustrated in detail. The telephone line is represented in the drawing by terminals 13 and 14, which are connected to tip and ring. One or more conventional telephone hand sets (not shown) are also connected to tip and ring.

In this embodiment of the invention, the micro-processor 11 is programmed to control the modem 12 such that the modem will only respond to ringing on the telephone line to go off hook for automatic tele-communication in response to an incoming call from a central location during a predetermined time window. This helps to minimise possible interference with normal voice communication use of the telephone line. The predetermined time window can be, for example, a ten minute period between 3 a.m. and 3.10 a.m., a time when it is not likely that there would be incoming voice calls on the telephone line that would be affected by the modem going off hook. The time window can be set in a memory of the micro-processor 11, which has a clock 10. In accordance with conventional techniques, the clock in the micro-processor 11 may, if desired, be periodically re-set, for example during automatic tele-communication with the central location, to ensure that the micro-processor will treat in-coming calls during a selected predetermined time window as being calls requiring automatic tele-communication. Also, in accordance with conventional techniques, the micro-processor may be provided with a back-up battery so that data such as the timing of the window is retained in the event of a power failure.

A ringing signal applied between terminals 13 and 14 is first passed through a radio frequency interference filter, including inductors L5 and L6, and capacitors C5 to C8 as illustrated in the drawings. The filtered ringing signal is current limited by a resistor R3 and a capacitor C10. Zener diodes D7 and D8 are included in the circuit to ensure that the amplitude of any signal passed through to the rest of the circuitry exceeds a set amount, e.g. 51 volts, and that the signal thereby qualifies as an authentic ringing signal.

The ringing signal is then rectified by circuit U4, which drives an RC time delay circuit, comprising a resistor R15 and a capacitor C13, through a Zener diode D9. The Zener diode D9 sets a constant voltage, such as 6.8 volts, and the resistor R15 and capacitor C13 are selected to provide a suitable time delay, such as 3.5 milli-seconds. The purpose of the integration of the ringing signal, together with the 51 volt qualification, is to ensure that pulse noise, generated for example by dialling, line testing, induction or natural causes, is not treated as a ringing signal on the telephone line. The delayed signal is supplied through a light emitting diode photo-transistor U6 to a signal line WU. In this embodiment of the invention and for normal ringing, U6 is driven for approximately 5 to 10 milli-seconds, which allows U6 to provide a continuous signal on the line WU for approximately 4 to 14 milli-seconds. The signal line WU is connected to the micro-processor 11.

The micro-processor 11 recognises a signal occurring on the signal line WU during the predetermined time window as being an in-coming call for setting up automatic tele-communication with the central location. In areas where there is no ringing above 30 Hz, the micro-processor is arranged to recognise the signal on the line WU, after 5 to 10 milli-seconds with no break, as valid ringing. Otherwise, with ringing above 30 Hz, the micro-processor 11 recognises the signal as valid ringing after about 3 to 5 milli-seconds. In any event, after the micro-processor decides that the signal on the line WU constitutes valid ringing, it checks for coincidence with the predetermined time window. If coincidence exists, the micro-processor immediately supplies outputs on the signal lines OHEN and PDIAL.

The output on the line OHEN is supplied through a resistor R6 and a transistor Q3 to close a relay K1. A diode D5 assures positive closing of the relay K1. Closure of the relay K1 causes the telephone line signal applied between tip and ring to be transmitted to plus and minus outputs of a circuit U3. Device Z1 protects the circuit U3 and the components connected to its plus and minus outputs from any damaging line transients. The plus and minus outputs of the circuit U3 are coupled through a capacitor C12 to a small coupling transformer T1, which allows audio driving and coupling to the modem 12.

As discussed above, even after the modem 12 goes off hook, it akes some time for ring trip to occur at the central office supplying the ringing signal on the telephone line, and this can cause abbreviated ringing of telephone hand sets connected to the telephone line. In accordance with the above described embodiment of the present invention, the modem 12 goes off hook approximately 11 milli-seconds after the start of ringing, plus about 2 milli-seconds due to the time involved in closure of the relay K1. This has been experimentally found to be short enough to prevent a ringing sound from other telephones connected to the telephone line, if the ring power is loaded down to less than 30 volts until ring trip takes place in the central office which supplies the ringing signal. Ring trip can occur between 10 and 250 milli-seconds after the modem goes off hook, provided that the telephone line is essentially shorted until ring trip occurs. The additional circuitry provided by the invention and illustrated in the drawing connected between the plus and minus outputs of the circuit U3 functions to load the telephone line, essentially shorting it, for a length of time sufficient to allow ring trip to occur so that there is no ringing on any hand sets connected to the telephone line.

In the drawing, the circuitry for loading the telephone line until ring trip occurs is connected to the plus and minus outputs of the circuit U3. A transistor Q6 and related components, which include resistors R17, R21 and R22, a light emitting diode photo-transistor U5, a buffer U7, a capacitor C11, and resistors R18 and R20, fulfil the requirement of shorting the telephone line until ring trip takes place. The micro-processor signal on the line PDIAL drives the light emitting diode of U5 through the buffer U7 and an RC circuit comprising the resistor R20 and the capacitor C11. In accordance with this particular embodiment of the invention, the buffer U7 with its RC circuit serves as a 400 milli-second one shot multi-vibrator. The photo-transistor of U5 is coupled via the resistors R21 and R22 across the transistor Q6. Depending upon the characteristics of the telephone line at the central office supplying the ringing signal, the time constant of the resistor R20 and the capacitor C11 can be adjusted to ensure clamping of the transistor Q6 until ring trip occurs. In this particular embodiment, the transistor Q6 saturates at approximately 10 to 15 volts at 300 milli-amps. Current is limited by resistors R1, R2 and the telephone line resistance. The voltage drop across the resistor R1, the resistor R2, the circuit U3 and the transistor Q6 (5 volt minimum in accordance with this particular embodiment) ensures sufficient voltage on the telephone line for memory retention in any electronic telephones connected to the same telephone line. After the time delay provided by the RC circuit formed by the resistor R20 and the capacitor C11, the transistor Q6 becomes an open circuit, which leaves only the transistor Q5 and its related components to maintain the off hook condition.

Transistors Q5 and Q4, together with a resistor R10, form a constant current sink, set in accordance with this particular embodiment at 28 milli-amps. This constant current sink is switched on or off by the micro-processor output on the line PDIAL through a light emitting diode photo-transistor U1 and resistors R9, R11 and R12, as long as there is an output on the line OHEN. Being a constant current sink, the resulting shunt impedance is high, mainly set by the resistor R11. This permits the audio driving and termination via the small coupling transformer T1 and DC blocking capacitor C12.

The arrangement described above is adequate to prevent any ringing from a properly designed telephone in connection with in-coming calls for automatic tele-communication with a modem. Specifically, an incoming ringing signal is suppressed to less than 15 to 20 volts after a programmable delay of about 10 to 20 milli-seconds after the first time the ringing signal reaches a 60 volt amplitude. However, there are various poorly designed telephones on the market, often at very low cost, which might still have a possibility of ringing, and indeed often do ring during dialling of another telephone connected to the line. Adjustments are possible to eliminate even this ringing. For example, the detection of the signal on the line WU can be speeded up by omitting the capacitor C13 from the circuitry described above. As another example, the micro-processor response can be speeded up so that it responds to the signal on the line WU in about 1 milli-second. As another example, a relay K1 can be selected which has a faster response, of the order of 0.3 milli-seconds. If all these exemplary steps are taken, the delay to clamping the ringing signal can be reduced to about 3 milli-seconds after the ringing signal reaches 60 volts. This will suppress ringing of even poorly designed telephones, at the cost of the modem perhaps going off hook too often. In such cases, however, the time window during which a signal on the line WU is acted upon can be narrowed, thus minimising any uncertainty as to the modem going off hook.

**Claims**

1. Apparatus for use in a tele-communication system for suppressing ringing of a telephone hand set at a location including a modem when communication with the modem over a telephone line is initiated, the apparatus being characterised by a micro-processor (11) arranged in response to ringing signals on the telephone line during a predetermined time window to deliver an output to signal the modem (12) to go off hook, and means (Q6, R17, R21, R22, U5, U7, C11, R18, R20) for establishing a load across the telephone line for a predetermined time period when the modem goes off hook whereby to prevent ringing of the telephone hand set for a period of time sufficient to allow ring trip to occur on the telephone line.

2. Apparatus as claimed in claim 1, characterised in that the means for establishing the load comprise a transistor (Q6) coupled to the micro-processor through an RC circuit (C11, R20) whereby effectively to short circuit the telephone line when the modem goes off hook for a period of time limited by the time constant of the RC circuit.

3. Apparatus as claimed in claim 1 or 2, characterised by means (L5, L6, C5 to C8, R3, C10, D7, D8, U4, R15, C13, D9, U6) responsive to ringing signals on the telephone line to deliver an input to the micro-processor indicating ringing.

4. Apparatus as claimed in claim 3, characterised in that the means responsive to the ringing signals comprise filter means (L5, L6, C5 to C8) for filtering noise and transients on the telephone line to prevent erroneous indications of ringing to the micro-processor.

5. Apparatus as claimed in claim 3 or 4, characterised in that the means responsive to the ringing signals comprise Zener diode means (D7, D8) for ensuring that the input to the micro-processor indicating ringing is generated in response to ringing signals on the telephone line exceeding a predetermined voltage level.

6. Apparatus as claimed in claim 3, 4 or 5, characterised in that the means responsive to ringing signals on the telephone line comprise integration means (U4, R15, C13, D9) for inhibiting pulse noise on the telephone line from generating an input to the micro-processor indicating ringing.

7. Apparatus as claimed in any preceding claim, characterised by a constant current sink (Q4, Q5, R10) for providing a high shunt impedance, and coupling transformer means (T1) connected in parallel with the constant current sink for coupling the telephone line to the modem.

8. A method of suppressing ringing of a telephone hand set at a location including a modem when communication with the modem over a telephone line is initiated, the method being characterised by controlling the modem (12) to go off hook in response to ringing signals on the telephone line only during a predetermined time window, and establishing a load across the telephone line for a predetermined time period when the modem goes off hook whereby to prevent ringing of the telephone hand set for a period of time sufficient to allow ring trip to occur on the telephone line.

9. Apparatus for use in an automatic telecommunication system including a central location and at least one remote location and wherein a data reporting system including a modem is situated at the remote location for communication with the central location over the switched telephone network via a telephone line at the remote location to which at least one telephone hand set is also connected, the apparatus suppressing ringing of the at least one telephone hand set when the central location initiates a call to the modem at the at least one remote location and being characterised by a micro-processor (11) for controlling the modem (12) to respond to in-coming ringing signals on the telephone line only during a predetermined time window, means (L5, L6, C5 to C8, R3, C10, D7, D8, U4, R15, C13, D9, U6) for detecting a ringing signal on the telephone line and delivering an input to the micro-processor indicating ringing whereby the micro-processor delivers an output if the ringing occurs during the predetermined time window, means (R6, Q3, K1, D5, Z1, U3, C12, T1) responsive to the micro-processor output to drive the modem to go off hook, means (Q6, R17, R21, R22, U5, U7, C11, R18, R20) driven by the micro-processor for establishing a load across the telephone line when the modem goes off hook for a predetermined time period to essentially provide short circuiting of the telephone line for a period of time sufficient to allow ring trip on the telephone line, thereby preventing any ringing of telephone hand sets connected to the telephone line.

10. A method for use in an automatic telecommunication system including a central location and at least one remote location wherein a data reporting system including a modem is situated at the remote location for communication with the central location over the switched telephone network via a telephone line at the remote location to which at least one telephone hand set is connected, for suppressing ringing of the at least one telephone hand set when the central location initiates a call to the modem at the at least one remote location, the method being characterised by the steps of providing a micro-processor (11) for controlling the modem to respond to in-coming ringing signals on the telephone line only during a predetermined time window, detecting a ringing signal on the telephone line and delivering an input to the micro-processor indicating ringing whereby the micro-processor delivers an output if the ringing occurs during the predetermined time window to drive the modem to go off hook, establishing a load across the telephone line when the modem goes off hook with the load being established for a predetermined time period to essentially provide short circuiting of the telephone line for period of time sufficient to allow ring trip on the telephone line, thereby preventing any ringing of the telephone hand sets connected to the telephone line.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 144 085  (ADTEL)<br>* Page 29, line 31 - page 30, line 26; figure 6 *<br>--- | 1,3,4,6,8-10 | H 04 M  11/00 |
| Y | US-A-4 126 762  (MARTIN et al.)<br>* Column 4, line 64 - column 5, line 27; column 5, line 50 - column 6, line 28; column 8, line 60 - column 9, line 43; figure 3 * | 1,3,4,6,8-10 | |
| A | | 2,5,7 | |
| | --- | | |
| A | GB-A-2 099 260  (TIMEX)<br>* Abstract *<br>----- | 1,8-10 | |
| | | | TECHNICAL FIELDS SEARCHED (Int. Cl.4) |
| | | | H 04 M |

The present search report has been drawn up for all claims

| Place of search | Date of completion of the search | Examiner |
|---|---|---|
| THE HAGUE | 07-08-1989 | MIKKELSEN C. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................................................

& : member of the same patent family, corresponding
    document

EPO FORM 1503 03.82 (P0401)